# EUROPÄISCHE PATENTSCHRIFT

(11) **EP 1 793 476 B1**
(45) Veröffentlichungstag und Bekanntmachung des Hinweises auf die Patenterteilung: **07.01.2009**
(21) Anmeldenummer: 06023590.0
(22) Anmeldetag: 14.11.2006
(51) Int. Cl.: H02K 5/22, H02K 5/128, F04D 13/06

(54) **Kreiselpumpe mit Spalttopf**
Centrifugal pump with air-gap sleeve
Chemise d'entrefer pour une pompe centrifuge

(30) Priorität: 01.12.2005 DE 102005057661
(43) Veröffentlichungstag der Anmeldung: 06.06.2007
(73) Patentinhaber: WILO SE, 44263 Dortmund (DE)
(72) Erfinder: Stock, Bernd-Thorsten, 44137 Dortmund (DE); Küster, Bernd, 44263 Dortmund (DE)
(74) Vertreter: COHAUSZ DAWIDOWICZ HANNIG & SOZIEN

(56) Entgegenhaltungen:
- DE-A1- 10 103 209
- DE-A1- 19 845 864
- DE-A1- 19 903 817
- FR-A1- 2 500 084
- US-A- 5 493 159

## Beschreibung

Die Erfindung betrifft eine Kreiselpumpe mit einem zwischen Rotor und elektrischen Statorwicklungen angeordneten Spalttopf insbesondere aus Kunststoff, an dessen dem Pumpenlaufrad zugewandten Seite ein flanschförmiger Kragen koaxial nach außen vorstehend angeformt ist.

Eine derartige Kreiselpumpe ist aus der DE 198 45 864A1 bekannt. Um die an einem elektromotorischen Stator einer Pumpe austretenden Drahtlitzen der Statorwicklung zu bündeln und zu verschalten, ist es bekannt, die Drahtlitzen auf einer zusätzlichen Platine zu befestigen, die Leiterbahnen und Kontaktflächen trägt. Dies ist in der Herstellung und Montage aufwendig.

Aufgabe der Erfindung ist es, eine Kreiselpumpe der eingangs genannten Art so zu verbessern, dass die an der Statorwicklung austretenden Drahtlitzen auf konstruktiv einfache Weise befestigt und kontaktiert sind, ohne zusätzliche Bauteile zu erfordern.

Diese Aufgabe wird erfindungsgemäß dadurch gelöst, dass auf der dem Pumpenlaufrad abgewandten Fläche des Kragens Leiterbahnen befestigt sind, auf denen die austretenden Enden der Drahtlitzen der Statorwicklung kontaktiert insbesondere angelötet sind.

Damit werden Funktionen der Kontaktierung, der Verschaltung und der Nassraumabdichtung in einem einzigen Bauteil vereint. Hierbei werden zusätzlich folgende Vorteile erzielt:
- Kombination eines Nassraumbauteils mit Elektrik-/Elektronikkomponenten in einem einzigen Bauteil unter Beibehaltung der Isolierfunktion
- vereinfachte Fertigungsverfahren wegen geringerer Anzahl der Bauteile
- Erhöhung der Prozesssicherheit
- Kostenreduzierung speziell in der Serienfertigung
- funktionelle Vereinfachung der Konstruktion
- einfache und sichere Bauweise und Herstellung auch bei sehr kleinen Pumpenabmessungen

Besonders vorteilhaft ist es hierbei, wenn die Leiterbahnen in MID-Technik auf der Kragenfläche aufgebracht sind, so dass eine weitere Vereinfachung der Herstellung und Montage erzielt wird.

Auch ist von besonderem Vorteil, wenn die Leiterbahnen auf der Kragenfläche zu Befestigungsflächen (pads) erweitert sind, auf denen die Drahtlitzenenden befestigt insbesondere angelötet sind. Hierdurch werden sichere Befestigungsflächen für die Wicklungsdrähte geschaffen, so dass eine einfache Montage auch bei kleinen Abmessungen erreicht wird.-Hierbei wird auch vorgeschlagen, dass die Befestigungsflächen in MID-Technik auf der Kragenfläche aufgebracht sind.

Von Vorteil ist auch, wenn der Spalttopf auf dem dem Pumpenlaufrad zugewandten Ende zwischen dem Kragen und der Topfwand einen koaxialen Ringkanal bildet, in dem die Statorwicklung mit einem Endbereich einliegt. Hierdurch werden die Abmessungen noch einmal verringert bei sicherem Halt und leichter Montage.

Eine besonders einfache Kontaktierung wird erreicht, wenn der Kragen einen flächigen radialen Vorsprung aufweist, auf dem die Leiterbahnen zur Kontaktierung enden. Hierbei kann der Vorsprung außen über das Gehäuse des Motors und/oder der Pumpe vorragen. Die Austrittsstelle für den Vorsprung wird auf einfache Weise erreicht, wenn der Vorsprung zwischen den Gehäusestirnflächen liegt, mit denen das Motorgehäuse und das Pumpengehäuse aneinandergrenzen.

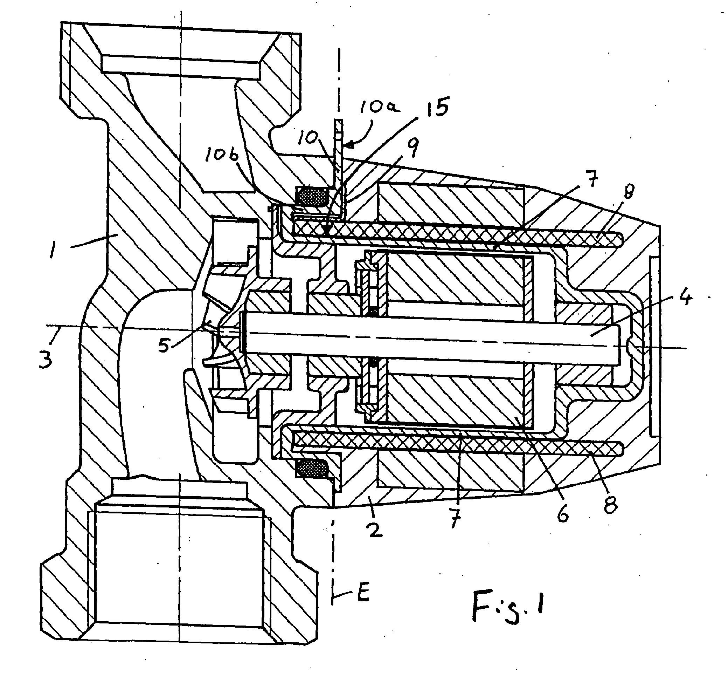

Ein Ausführungsbeispiel der Erfindung ist in den Zeichnungen dargestellt und wird im Folgenden näher beschrieben. Es zeigen
- Fig. 1: einen axialen Schnitt durch die Motorpumpe und

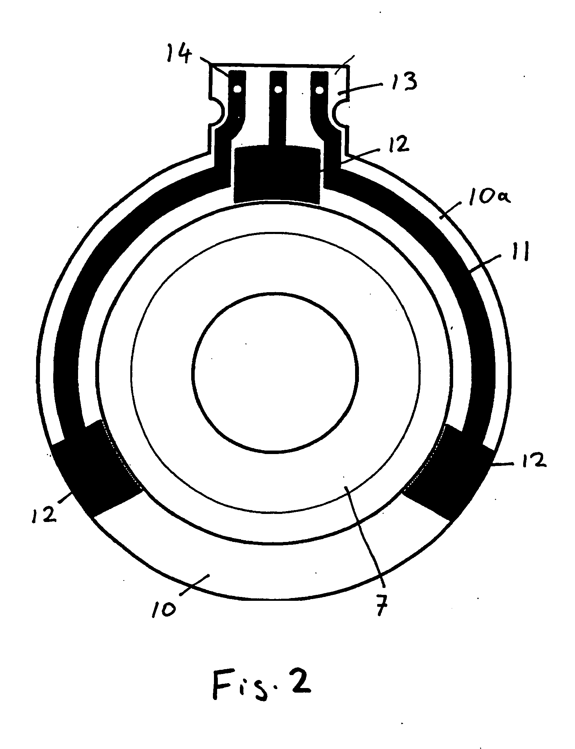

- Fig. 2: eine Stirnansicht auf den Spalttopf mit Kragen.

Die Kreiselmotorpumpe weist ein Pumpengehäuse 1 und ein Motorengehäuse 2 auf, die in einer Ebene E aneinandergrenzen, zu der die Achse 3 der Pumpenwelle 4 lotrecht steht. Auf der Welle 4 ist innerhalb des Pumpengehäuses 1 das Pumpenlaufrad 5 und innerhalb des Motorengehäuses 2 der Rotor 6 befestigt. Hierbei ist der Rotor 6 koaxial von einem Spalttopf 7 umgeben, so dass es sich um eine Nassläuferpumpe handelt.

Auf dem Spalttopf 7 liegt außen die elektrische Statorwicklung 8, aus der an dem dem Pumpenlaufrad zugewandten Ende Drahtlitzen 9 austreten. Um die Enden dieser Drahtlitzen 9 zu befestigen und zu kontaktieren; bildet der Spalttopf 7 auf der dem Pumpenlaufrad zugewandten Seite bzw. Ende einen flanschförmigen koaxial nach außen vorstehenden Kragen 10, der wie auch der Spalttopf 7 aus Kunststoff besteht und damit am Spalttopf angeformt ist.

Auf der dem Pumpenlaufrad abgewandten, zur Ebene E parallelen Fläche 10a des Kragens 10 sind Leiterbahnen 11 in MID-Technik eingebracht, wobei diese Leiterbahnen an den Wicklungen 8 nahen Enden erweitert sind, um Befestigungsflächen 12 zu bilden, auf denen die Enden der Drahtlitzen 9 befestigt insbesondere aufgelötet sind. Diese Pads bildenden Befestigungsflächen 12 sind wie auch die Leiterbahnen in MID-Technik auf der Fläche 10a befestigt.

Im Folgenden wird beschrieben, wie die Leiterbahnen 11, Befestigungsflächen 12 und Kontaktflächen 14 und insbesondere elektronische Bauelemente auf Kragen 10 und Vorsprung 13 aufgebracht bzw. in die Oberfläche in MID-Technik integriert werden.

Im MID-Verfahren (Molded Interconnection Device) erfolgt die Strukturierung während des Spritzgussverfahrens selbst oder es wird eine nachträgliche Strukturierung des spritz-gegossenen Bauteils durchgeführt. Als Strukturierungsverfahren während des Spritzgussverfahrens eignet sich das so genannte Zwei-Schuss-Verfahren. Die eigentliche Strukturierung erfolgt hierbei durch den Spritzgussprozess selbst. Dazu wird ein metallisierbarer Kunststoff mit einem nicht metallisierbaren Material umspritzt und anschließend außenstromlos metallisiert. Durch die partielle Metallisierung wird die spätere Leiterstruktur sichergestellt, wobei die Metallisierbarkeit des Kunststoffes durch vorkatalysiertes Material erreicht wird. Das Zwei-Schuss-Verfahren ist somit ein Zwei-Komponenten-Spritzguss-Verfahren, bei welchem ein Formteil zunächst spritz-gegossen wird, anschließend in einem Bad eine chemische Oberflächenaktivierung erfährt und schließlich selektiv metallisiert wird. Das Zwei-Komponenten-Spritzguss-Verfahren ist besonders bei hohen Stückzahlen äußerst wirtschaftlich.

Alternativ kann als MID-Verfahren auch ein Ein-Komponenten-Spritzguss-Verfahren, vorzugsweise ein Laser-Strukturier-Verfahren angewendet werden. Die Laser-Strukturierung bietet gegenüber konventionellen MID-Verfahren den Vorteil, dass sowohl breite als auch extrem feine Leiterbahnstrukturen realisiert werden können. Außerdem bietet dieses Verfahren eine hohe Flexibilität hinsichtlich des Leiterbildes, da sich Modifizierungen leicht durch Änderungen der Strukturierungsdaten realisieren lassen. Eine nachträgliche Anpassung des Leiterbahnentwurfs ist also nicht mit einer Werkzeugänderung des Spritzgießwerkzeuges verbunden.

Mit Hilfe eines Laser-Strukturierungsverfahrens lässt sich auf besonders einfache Weise ein automatisierter Herstellungsprozess für Schaltungslayouts auf dreidimensionalen Trägerstrukturen, insbesondere auf den erfindungsgemäßen Spalttopf 7 realisieren, so dass der Spalttopf 7 sowie die Motorverschaltung und die Bauelementverschaltung zu einer einzigen Einheit funktionell zusammengefasst werden können. Die Grundlage des Verfahrens bilden dotierte Thermoplaste, auf denen die zu realisierenden Leiterbahnen mittels Laser gezielt aktiviert und anschließend im chemischen Bad metallisiert werden.

Für die Herstellung des erfindungsgemäßen Kragens 10 kann zum Spritzgussverfahren ein thermoplastischer Kunststoff verwendet werden, in dem eine metallorganische Komplexverbindung gelöst oder fein dispergiert vorliegt. Diese spezielle chemische Verbindung lässt sich durch aufgebrachte Laserstrahlung derart modifizieren, dass sie eine selektive-Metallabscheidung in den bestrahlten Bereichen für den folgenden Metallisierungsprozessschritt katalysiert.

Bei der Herstellung des Spalttopfes 7 mit Kragen 10 erfolgt bei Anwendung des Laser-Strukturierungsverfahrens somit zunächst die Herstellung des Spalttopfes mit Kragen durch Spritzgießen, anschließend die Laserstrukturierung selbst, in dem die Oberfläche 10a des Kragens durch einen Laserstrahl an denjenigen Stellen belichtet wird, an denen die Teile 11, 12, 14 entstehen sollen. An den belichteten Stellen werden Metallkeime freigesetzt, an welchen sich in einem anschließenden Bad, in das die Wickelkopfkappe gelegt wird, beispielsweise Kupfer abscheidet, was schließlich die Teile 11, 12, 14 bildet.

Für den Erhalt der erforderlichen Oberflächenstruktur wird bei der Laserstrukturierung an der Grenzfläche Kunststoff-Metall eine sehr hohe Haftung von Metall und Kunststoff erzielt. Die mit diesem MID-Verfahren hergestellten Kragen als Träger elektrischer Teile 11, 12, 14 ist äußerst robust und langlebig und ermöglicht durch die funktionelle Integration elektrischer Bauteile und Formteil die Reduzierung der baulichen Größe. Insbesondere bei hohen Stückzahlen ist die Herstellung eines Spalttopfes mit MID-Technik besonders wirtschaftlich.

Der Kragen 10 bildet an einer Stelle, insbesondere im oberen Bereich der Pumpe, einen flächigen radialen Vorsprung 13, auf dem die Leiterbahnen 11 enden und damit dort Kontaktflächen 13 bilden. Hierbei ist die die Leiterbahnen 11 tragende Fläche des Vorsprungs 13 eine Verlängerung der Fläche 10a und liegt damit in derselben Ebene.

Der Vorsprung 13 des Spalttopfkragens 10 ragt außen über das Gehäuse des Motors und der Pumpe im Bereich der Ebene E vor, so dass die in der Ebene E aneinanderliegenden Stirnflächen beider Gehäuse 1, 2 zu beiden Seiten des Kragens 10 anliegen und eine oder beide Stirnflächen eine Ausnehmung für den Kragen bilden. Der Vorsprung 13 wird damit als Stecker außen an der Pumpe genutzt, insbesondere zur Kontaktierung mit einem auf der Pumpe aufsitzenden Elektronik- bzw. Klemmenkasten, der nicht dargestellt ist.

Auf dem dem Pumpenlaufrad zugewandten Ende bildet der Spalttopf zusammen mit einer koaxial den Spalttopf ringförmig umgebenden Ringfläche 10b einen koaxialen Ringkanal 15, in dem die dem Pumpenlaufrad zugewandte Seite der elektrischen Wicklung 8 insbesondere formschlüssig einliegt.

## Patentansprüche

1. Kreiselpumpe mit einem zwischen Rotor (6) und elektrischen Statorwicklungen (8) angeordneten Spalttopf (7), an dessen dem Pumpenlaufrad (5) zugewandten Seite ein flanschförmiger Kragen (10) koaxial nach außen vorstehend angeformt ist, **dadurch gekennzeichnet, dass** auf der dem Pumpenlaufrad (5) abgewandten Fläche (10a) des Kragens (10) Leiterbahnen (11) befestigt sind, auf denen die austretenden Enden der Drahtlitzen (9) der Statorwicklung (8) kontaktiert sind.

2. Kreiselpumpe nach Anspruch 1, **dadurch gekennzeichnet, dass** die Leiterbahnen (11) in MID-Technik auf der Kragenfläche (10) aufgebracht sind.

3. Kreiselpumpe nach Anspruch 1 oder 2, **dadurch gekennzeichnet, dass** die Leiterbahnen (11) auf der Kragenfläche (10a) zu Befestigungsflächen (pads) (12) erweitert sind, auf denen die Drahtlitzenenden befestigt sind.

4. Kreiselpumpe nach Anspruch 3, **dadurch gekennzeichnet, dass** die Befestigungsflächen (12) in MID-Technik auf der Kragenfläche (10a) aufgebracht sind.

5. Kreiselpumpe nach einem der vorherigen Ansprüche, **dadurch gekennzeichnet, dass** der Spalttopf (7) auf dem dem Pumpenlaufrad (5) zugewandten Ende zwischen dem Kragen (10) und der Topfwand einen koaxialen Ringkanal (15) bildet, in dem die Statorwicklung (8) mit einem Endbereich einliegt.

6. Kreiselpumpe nach einem der vorherigen Ansprüche, **dadurch gekennzeichnet, dass** der Kragen (10) einen flächigen radialen Vorsprung (13) aufweist, auf dem die Leiterbahnen (11) zur Kontaktierung enden.

7. Kreiselpumpe nach Anspruch 6, **dadurch gekennzeichnet, dass** der Vorsprung (13) außen über das Gehäuse (1, 2) des Motors und/oder der Pumpe vorragt.

8. Kreiselpumpe nach Anspruch 7, **dadurch gekennzeichnet, dass** der Vorsprung (13) zwischen den Gehäusestimflächen liegt, mit denen das Motorgehäuse (2) und das Pumpengehäuse (1) aneinandergrenzen.

9. Kreiselpumpe nach einem der vorherigen Ansprüche, **dadurch gekennzeichnet, dass** der Spalttopf (7) aus Kunststoff ist.

10. Kreiselpumpe nach einem der vorherigen Ansprüche, **dadurch gekennzeichnet, dass** die Enden der Drahtlitzen (9) der Statorwicklung (8) an den Leiterbahnen (11) angelötet sind.

## Claims

1. Centrifugal pump with an air-gap casing (7) between the rotor (6) and electrical stator windings (8), with a flange-type collar (10), which projects coaxially outwards, being formed on the side of the air-gap casing (7) that faces the pump wheel (5), **characterized in that** conductor paths (11), to which the ends of the wire strands (9) of the stator winding (8) are connected, are attached to the face (10a), of the collar (10), that faces away from the pump wheel (5).

2. Centrifugal pump in accordance with claim 1, **characterized in that** the conductor paths (11) are applied to the surface of the collar (10) using an MID (moulded interconnection device) technology.

3. Centrifugal pump in accordance with claim 1 or 2, **characterized in that** the conductor paths (11) are extended, on the surface (10a) of the collar, to form attachment pads to which the wire strands are attached.

4. Centrifugal pump in accordance with claim 3, **characterized in that** the attachment pads (12) are applied to the surface (10a) of the collar using an MID technology.

5. Centrifugal pump in accordance with one of the preceding claims, **characterized in that** the air-gap casing (7) forms, between the collar (10) and the side of the casing, a coaxial annular channel (15) on the end that faces the pump wheel (5).

6. Centrifugal pump in accordance with one of the preceding claims, **characterized in that** the collar (10) has a laminar radial projection (13) on which the conductor paths (11) end to be connected.

7. Centrifugal pump in accordance with claim 6, **characterized in that** the projection (13) projects outwards over the housing (1, 2) of the motor and/or the pump.

8. Centrifugal pump in accordance with claim 7, **characterized in that** the projection (13) lies between the end faces, of the housing, that are adjoined by the motor housing (2) and the pump housing (1).

9. Centrifugal pump in accordance with one of the preceding claims, **characterized in that** the air-gap casing is made of plastic.

10. Centrifugal pump in accordance with one of the preceding claims, **characterized in that** the ends of the wire strands (9) of the stator winding (8) are soldered onto the conductor paths (11).

## Revendications

1. Pompe centrifuge comprenant une chemise d'entrefer (7) disposée entre un rotor (6) et des enroulements de stator électriques (8), chemise sur le côté de laquelle, tourné vers la roue mobile de pompe (5), est conformé un collet (10) en forme de bride en saillie coaxiale vers l'extérieur, **caractérisée en ce que** des bandes conductrices (11) sont fixées sur la surface (10a) du collet (10) opposée à la roue mobile de pompe (5), bandes sur lesquelles sont mises en contact les extrémités de sortie des fils torsadés (9) de l'enroulement de stator (8).

2. Pompe centrifuge suivant la revendication 1, **caractérisée en ce que** les bandes conductrices (11) sont appliquées dans la technique MID sur la surface du collet (10).

3. Pompe centrifuge suivant l'une des revendications 1 et 2, **caractérisée en ce que** les bandes conductrices (11) sur la surface de collet (10a) sont élargies en surfaces de fixation (pads) (12), sur lesquelles sont fixées les extrémités de fils torsadés.

4. Pompe centrifuge suivant la revendication 3, **caractérisée en ce que** les surfaces de fixation (12) sont appliquées dans la technique MID sur la surface de collet (10a).

5. Pompe centrifuge suivant l'une des revendications précédentes, **caractérisée en ce que** la chemise d'entrefer (7), sur l'extrémité tournée vers la roue mobile de pompe (5), forme entre le collet (10) et la paroi de la chemise un canal annulaire coaxial (15), dans lequel s'insère l'enroulement de stator (8) par une zone extrême.

6. Pompe centrifuge suivant l'une des revendications précédentes, **caractérisée en ce que** le collet (10) présente une saillie radiale plane (13), sur laquelle s'achèvent les bandes conductrices (11) pour la mise en contact.

7. Pompe centrifuge suivant la revendication 6, **caractérisée en ce que** la saillie (13) dépasse extérieurement du carter (1, 2) du moteur et/ou de la pompe.

8. Pompe centrifuge suivant la revendication 7, **caractérisée en ce que** la saillie (13) se situe entre les faces frontales de carters, par lesquelles le carter (2) du moteur et le corps de pompe (1) sont limitrophes l'un à l'autre.

9. Pompe centrifuge suivant l'une des revendications précédentes, **caractérisée en ce que** la chemise d'entrefer (7) est en matière plastique.

10. Pompe centrifuge suivant l'une des revendications précédentes, **caractérisée en ce que** les extrémités des fils torsadés (9) de l'enroulement de stator (8) sont brasées sur les bandes conductrices (11).
